# EUROPEAN PATENT APPLICATION

(11) **EP 2 608 138 A1**
(43) Date of publication of application: **26.06.2013**
(21) Application number: 12198976.8
(22) Date of filing: 21.12.2012
(51) Int. Cl.: G06Q 10/10, G06Q 10/06, G06F 17/30

(54) **Methods, Apparatuses and Computer Program Products for Providing Content to Users in a Collaborative Workspace System**

(30) Priority: 21.12.2011 GB 201122053
(71) Applicant: Ninian Solutions Limited, London EC1Y 2BP (GB)
(72) Inventor: Howell, Jonathan, London, EC1Y 2BP (GB); Cooper, Ian, London, EC1Y 2BP (GB)
(74) Representative: Cassie, Matthew David

(57) **Abstract**

A system and method and computer program product for the operation thereof to configure the system for delivering content to users of a collaborative workspace. The system comprising: one or more servers configured to be capable of communicating with a plurality of user-operated client devices over a network and to provide a collaborative workspace service by hosting one or more collaborative workspaces accessible by a plurality of users of said client devices, wherein the collaborative workspace service provides users with access to user-generated content and wherein the one or more servers have access to user data pertaining to the users of the collaborative workspace, the one ore more servers being configured to be operable to perform at least one of: generating content identification data indicative of items of user-generated content accessible using the collaborative workspace service; and monitoring the interaction of a user with user-generated content accessible using the collaborative workspace service and generating collaboration data indicative thereof. The system further comprising: a recommendation engine in logical communication with said one or more servers, the recommendation engine being operable to parse one or more of said content identification data, said collaboration data and said user data to determine, for respective users of the collaborative workspace service, recommended items of said user-generated content to which each respective user may need to have access. The one or more servers are further configured to be operable to transmit, for each user, at least some of that user's recommended items of user-generated content to one or more client devices operated by that user.

## Description

### Field of the invention

This invention relates to providing digital content to users of a computer-implemented collaborative workspace service. In particular, the present invention relates to one or more servers configured to provide a collaborative workspace service by hosting one or more collaborative workspaces that enable users of client devices communicable with the one or more servers to have access to user-generated content. The present invention also relates to client devices configured to be usable to access the collaborative workspaces.

### Background to the invention

Collaborative workspace systems typically comprise one or more servers that are configured to provide a collaborative workspace service that hosts one or more workspaces. Users can gain access to the one or more collaborative workspaces using one or more client devices operated by the user. The collaborative workspace service hosts content including user-generated content that is accessible by some or all of the users of the service. The client devices, such as desktop PCs, laptops, tablets, PDAs and smart phones are in communication with the server through a communication network such as the internet, a private network or another suitable communication network.

A collaborative workspace service may be provided in the form of a web interface accessible to users of client devices pointing their browsers to a particular web portal or using a specific application to login to the collaborative workspace service using a unique digital secure identity in the form of a user account identified by a user name and password. The web interface enables users to collaborate, for example on projects, by generating and accessing content in partitioned workspaces by, for example, posting to discussion threads, conducting audio/videoconferences, identifying, allocating and tracking tasks, sharing ideas using whiteboards or scrapbooks, and to upload, edit and download and edit files. The content is typically stored in a database local or remote to the one or more servers and the web interface provided by the one or more servers acts as a portal to the content stored in the database.

Organisations, such as large private corporations and public bodies, are increasingly adopting the use of such collaborative workspaces for use by their employees to enhance efficiency, collaboration between geographically dispersed employees, and to allow flexible and remote working and working while in transit. Such collaborative workspaces also allow effective record keeping and version control, while involving a lower overhead on storage and administration. Further, provision of the collaborative workspaces can be outsourced to third parties who can offer guarantees of provisioning under service level agreements.

Users of the collaborative workspace service may be typically partitioned into "workgroups" by department or project, wherein users within a workgroup have access to certain content in a particular workspace that may represent a particular project. Users within different workgroups may have access to different workspaces and items of content may be accessible only in specific workspaces, or they may be shared between multiple workspaces. Users having access to one or more workspaces may have access to a large number of items of content that represent a large volume of data.

Users are typically able to download certain items of content from the collaborative workspace service, such as documents or image files, to their client device(s), edit the content and upload it back to the collaborative workspace system for review by other users in their workgroup.

However, a problem arises when the client device of a user is out of connectivity with the server hosting the collaborative workspace service. This might occur for example when a smart phone has no "3G" connection and therefore cannot communicate with the server, or when a user is in transit, for example, during a flight. In such an instance, the user of the client device is not able to access or download any content from the collaborative workspace service. This may lead to users becoming frustrated and being less inclined to use the collaborative workspace services.

There is thus an ongoing need to improve collaborative workspace services to improve usability and user experience.

### Summary of the invention

Viewed from a first aspect, the present invention provides a system for delivering content to users of a collaborative workspace, comprising; one or more servers configured to be capable of communicating with a plurality of user-operated client devices over a network and to provide a collaborative workspace service by hosting one or more collaborative workspaces accessible by a plurality of users of said client devices, wherein the collaborative workspace service provides users with access to user-generated content and wherein the one or more servers have access to user data pertaining to the users of the collaborative workspace, the one ore more servers being configured to be operable to perform at least one of: generating content identification data indicative of items of user-generated content accessible using the collaborative workspace service; and monitoring the interaction of a user with user-generated content accessible using the collaborative workspace service and generating collaboration data indicative thereof; the system further comprising: a recommendation engine in logical communication with said one or more servers, the recommendation engine being operable to parse one or more of said content identification data, said collaboration data and said user data to determine, for respective users of the collaborative workspace service, recommended items of said user-generated content to which each respective user may need to have access; wherein the one or more servers are further configured to be operable to transmit, for each user, at least some of that user's recommended items of user-generated content to one or more client devices operated by that user.

In the present application, "user-generated content" includes files created by the users of the system (for example documents and image files), metadata about the files (such as filenames, dates etc.), discussions and appointments and tasks set up through the collaborative workspace service amongst other content. Essentially, "user-generated content" refers to information that the user provides to the collaborative workspace service directly. On the other hand, "collaboration data" refers to information that the users provide indirectly, such as mouse clicks, tagging, file permissions etc. Essentially, "collaboration data" is data indicative of how a user interacts with content hosted by the collaborative workspace service. "User data" is information indicative of the identity or role of the user that might be provided, for example, when the user joins the collaborative workspace service. For example, user data might include the user's name, job title, department, etc.

The term "client device" includes any network-enabled computing device including, amongst others, a desktop PC, laptop, tablet, PDA and smart phone. Preferably, the collaborative workspace service is accessed by the users on their respective client device(s) through an application programming interface (API), or by pointing the web browser of the client device to the web portal of the collaborative workspace service.

In accordance with the present invention as set out in the above aspect, a server providing a collaborative workspace service can determine, for each user, items of recommended content that the server may transmit to the user's remote client device, for example, on request by the client device. The recommendation engine uses at least one of user data, collaboration data and content identification data to determine, for example using one or more appropriate algorithms, items of content to which the user might need to have access. For example, a member of staff working recently on a particular project may be identified by the recommendation engine to be likely to need access to content accessible in the workspace for that project, for example, on the basis of that user's recent interaction data. Additionally, that member of staff may be closely related by user data to other users, for example in the same department, who are currently working on another project having to which that user may need to have access.

By determining items of recommended content for a user and pushing at least some of that content to that user's client device, the user can automatically have access to content that he may need, for example, when that user's device has no connectivity, without the user first having to anticipate his content needs and download that content beforehand. In a preferred embodiment, however, instead of the server 'pushing' content, the user's client device is configured to 'pull' recommended content from a server, for example, periodically, or in response to a user operation.

This enables users to work collaboratively and effectively in conjunction with content provided in a collaborative workspace even when that user has no connectivity.

It may be technically possible to periodically synchronise the client device of a user with the collaborative workspace service in order to download all of the content available to that user to the user's client device such that the content is stored locally. However, this is impractical, especially in the case of large organisations. For example, the employees of a large company may each have access to many thousands of files through plural collaborative workspaces. It would be impractical to download each of these files to the users' devices, especially in the case of devices with limited memory such as smart phones. Even in the case where the client devices are desktop PCs with large storage capacity, synchronising the entire content available to a user would drive significant bandwidth usage, take up a large amount of hard disk space, and the initial synchronisation would take an unacceptably long time. Thus this approach would represent a massive bandwidth burden. In addition, the present inventors have identified that, for a typical user of a collaborative workspace service in a large organisation, that user on average accesses only 4% of the volume of content that user, in principle, could access through that user's workspaces. Thus transmitting all of the content each user could access to that user would also be massively inefficient.

The present invention provides an efficient and low-bandwidth way of enabling users to collaborate effectively when they are out of connectivity by anticipating which items of content that user may wish to have access to, and only downloading at least some of those recommended items of content. In this way, the recommendation engine of the present invention can intelligently anticipate the content usage and access patterns of the users, and serve them with up-to-date copies of that content at regular intervals.

Further, in cases of limited connectivity, the download speed of the content to the client device will be reduced, meaning that the perceived responsiveness of the collaborative workspace system to the user will be reduced. This is also a problem at peak times of network usage.

By anticipating which items of content a user will need to have access to, and transmitting copies of those items of content to the user's client device, when a user wishes to access an item of content in a collaborative workspace, the client device already has an up-to-date local copy of that item of content which it can access, and so the content item (provided it is up-to-date) should not have to be downloaded at the time of access. Thus this can significantly improved the perceived responsiveness of the collaborative workspace system.

In addition, as the server will transmit items of recommended content to users avoiding the need for the users to download the content on an ad hoc basis, the demand for download bandwidth on the collaborative workspace service can be significantly lower at times of peak usage than it would otherwise be. The present invention effectively smoothes out the bandwidth burden on the collaborative workspace system, which has the effect of lowering the server and bandwidth resource provisioning that is needed to provide a collaborative workspace service, while the same service level agreement can be fulfilled.

A user may use one client device to access the collaborative workspace service, or (s)he may have two or more client devices. In the case where (s)he has two or more, the server is operable to transmit the items of user-generated content to each of the client devices. This advantageously means that a user is provided with the benefits of the invention whether they are using a desktop PC at work, or a smart phone whilst travelling, for example.

Transmitting items of user-generated content to the respective client devices of the determined users provides many other advantages. One benefit is that the users can interact with the content (such as documents) on their client devices in a manner in which they are used to. For example, documents can be opened in the applications run on the client device. As the users are used to these applications, they can work more efficiently. Another advantage is that the determined user(s) have access to content that they need even when the client devices are unable to communicate with the server (for example when there is no internet access). This is particularly advantageous when a user wishes to access and/or edit a file when travelling.

Further, when a user requests an item of user-generated content from the collaborative workspace service that had already been transmitted to the client device of that user, the collaborative workspace service appears more responsive, improving the user's experience of the collaborative workspace service (as the file is already stored on the client device and does not have to be downloaded from the server).

An important aspect of the present invention is that the recommendation engine determines users of the collaborative workspace service who may need to have access to particular items of user-generated content. In this manner, the system attempts to "predict" the content that each user of the collaborative workspace service would request from the server and transmits it to that user's client device before (s)he requests it. In this manner, the system avoids the significant disadvantages of synchronising all of the available content to his/her device by only transmitting a fraction of the available content.

In embodiments, the workspaces may be partitioned such that content that is accessible by users in a first workspace is inaccessible to users in a second workspace, and vice-versa. A user may be a member of one workspace only, or (s)he might be a member of a plurality of workspaces. Each user is therefore associated with a network of other users through his/her workspace(s).

In embodiments, the respective client device(s) of the determined user(s) may store the transmitted items of user-generated content so as to mirror the hosting of the user-generated content by the collaborative workspace service. For example, although the transmitted content will be stored on the operating system of the client device (rather than the server), the client will perceive a seamless interface with the collaborative workspace service, allowing them to browse the locally stored content in the same manner as they would be used to when using the collaborative workspace service. This "mirroring" may be provided by the client device calling an application programming interface running on the collaborative workspace service.

In embodiments, the content identification data may comprise term vector data indicative of the user-generated content. This may be generated using a term vector model or a vector space model. However, the content identification data is not limited to this, and the server may use other models to generate the content identification data.

In embodiments, the at least one of said content identification data, collaboration data and user data may be parsed by the recommendation engine using user-based collaborative filtering. This is based on the network of users associated with the user who generated or interacted with the content. Alternatively or in addition, the at least one of said content identification data, collaboration data and user data may be parsed by the recommendation engine using item-based collaborative filtering. These user- and/or item-based filtering algorithms are performed by the recommendation engine and might include memory-based algorithms computing the similarity between items or users (for example "nearest-neighbour" algorithms) or model-based algorithms using data mining or machine-learning such as Bayesian or neural networks or latent semantic models to find patterns from training data.

In a preferred embodiment, the recommendation engine may be further operable to generate a list of recommended items of user-generated content for each user of the collaborative workspace service, based on the parsing of the at least one of said content identification data, collaboration data and user data. This is particularly the case when the at least one of said content identification data, collaboration data and user data is parsed by the recommendation engine using more than one algorithm. In such an instance, the results from the individual algorithms are combined in order to generate the list.

In a preferred embodiment, each user-operated client device may be operable to request, from the server, the list of recommended items of user-generated content for the respective user of the client device. This is typically done at predetermined time intervals, such as half-hourly or hourly. Client-side software running on a client device is operable to parse the list of recommended items for its respective user and communicate to the server which items from the list to transmit. In the case where the client device has limited storage capacity (for example a smart phone), the client device will instruct the server to transmit only a certain amount (for example 100MB) of the content. In the case where the client device is a desktop PC with large storage, the client device will request the server to transmit a larger amount (possibly of the order of gigabytes) to the PC. The amount of storage on the client device dedicated to storing transmitted content can advantageously be adjusted by the user.

Advantageously, the list of recommended items of user-generated content may be ranked in order of likelihood that the user may need to have access to the items. This means that even if the client device only receives a few items of content, these are likely to be ones that the user will request. As explained hereinabove, this provides the advantages of allowing the user to access the content when out of connectivity and making the collaboration service appear more responsive, without the significant drawbacks of synchronising all of the accessible content to a user's client device(s).

In embodiments, the system may further comprise storage in logical communication with the server for storing the user-generated content. The storage may be contained within the server or may be located separately to the server. In one embodiment storage may also store at least one of the content identification data, the collaboration data and the user data.

The recommended list of user-generated content is preferably stored in volatile memory such as RAM, although it may be stored in other memory, and periodically transmitted to the physical storage in logical communication with the server. This provides easy access to the list at a later time. However, in some embodiments, a new list is generated each time there is new content identification data, collaboration data or user data generated.

Viewed from a second aspect, the present invention provides a computer-implemented method of delivering content to users of a collaborative workspace service hosted by one or more servers that are configured to be capable of communicating with a plurality of user-operated client devices over a network and to provide a collaborative workspace service by hosting one or more collaborative workspaces accessible by a plurality of users of said client devices, wherein the collaborative workspace service provides users with access to user-generated content and wherein the one or more servers have access to user data pertaining to the users of the collaborative workspace service collaborative workspace service, the method comprising the steps of: performing, at the server, at least one of: generating content identification data indicative of items of user-generated content accessible using the collaborative workspace service; and monitoring the interaction of a user with user-generated content accessible using the collaborative workspace service collaborative and generating collaboration data indicative thereof; the method further comprising: parsing, at a recommendation engine in logical communication with the server, at one or more of said content identification data, said collaboration data or said user data to determine, for respective users of the collaborative workspace service, recommended items of said user-generated content to which each respective user may need to have access; and transmitting, for each user, at least some of that user's recommended items of user-generated content to one or more of the respective client device(s) operated by that determined user.

Viewed from a third aspect, the present invention provides a computer program product comprising instructions which when executed by data processing apparatus causes the apparatus to be configured to be operable in accordance with the server comprised in the system of as recited in the first aspect of the present invention set out above..

Viewed from a fourth aspect, the present invention provides a client device operable to receive content from a collaborative workspace, the client device being configured to be capable of communicating with one or more servers configured to provide a collaborative workspace service by the server hosting one or more collaborative workspaces accessible by a plurality of users of said client devices, wherein the collaborative workspace service provides users with access to user-generated content and wherein the server has access to user data pertaining to the users of the collaborative workspace, the client device being configured to receive from the one or more servers at least some of a user's recommended items of user-generated content determined by a recommendation engine in logical communication with said one or more servers, the recommendation engine being operable to parse one or more of content identification data indicative of items of user-generated content accessible using the collaborative workspace service; collaboration data indicative of the interaction of a user with user-generated content accessible using the collaborative workspace service; and said user data to determine, for respective users of the collaborative workspace service, recommended items of said user-generated content to which each respective user may need to have access.

Viewed from a fifth aspect, the present invention provides a computer-implemented method of operating a client device to receive content from a collaborative workspace, the client device being configured to be capable of communicating with one or more servers configured to provide a collaborative workspace service by the server hosting one or more collaborative workspaces accessible by a plurality of users of said client devices, wherein the collaborative workspace service provides users with access to user-generated content and wherein the server has access to user data pertaining to the users of the collaborative workspace, the method comprising receiving, from the one or more servers, at least some of a user's recommended items of user-generated content determined by a recommendation engine in logical communication with said one or more servers, the recommendation engine being operable to parse one or more of content identification data indicative of items of user-generated content accessible using the collaborative workspace service; collaboration data indicative of the interaction of a user with user-generated content accessible using the collaborative workspace service; and said user data to determine, for respective users of the collaborative workspace service, recommended items of said user-generated content to which each respective user may need to have access.

Viewed from a sixth aspect, the present invention provides a computer program product comprising instructions which when executed by data processing apparatus causes the apparatus to be configured to be operable in accordance with the client device as set out above in the fourth aspect of the invention.

### Brief description of the drawings

Certain preferred embodiments of aspects of the present invention will now be described, by way of example only, with reference to the following drawings, in which:
Figure 1 shows a schematic overview of a collaborative workspace system according to one embodiment of the invention;
Figure 2 shows a schematic representation of a client device according to one embodiment of the invention;
Figure 3 shows a schematic representation of a server according to one embodiment of the invention; and
Figure 4 shows a process flow diagram outlining an exemplary embodiment of the invention.

### Detailed description of the drawings

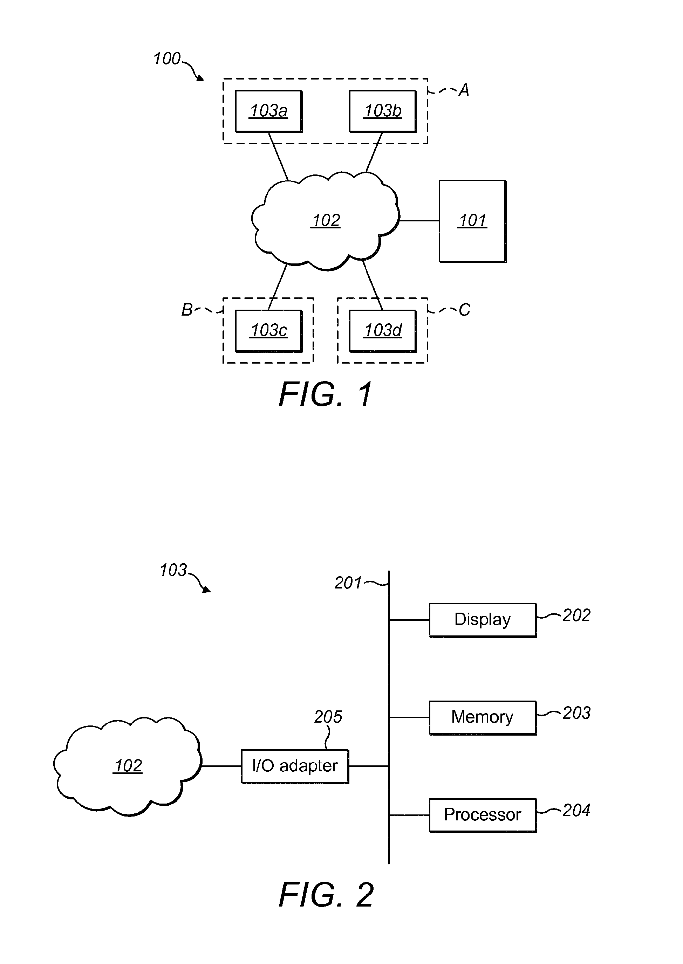

Figure 1 shows a schematic diagram of a collaborative workspace system 100 according to one embodiment of the invention. Collaborative workspace system 100 includes a server or server farm 101 connected to a plurality of client devices 103a, 103b, 103c and 103d through the internet 102. Although in this embodiment the client devices and the server are in communication through the internet 102, in principal any kind of electronic communication could be used. The client devices can be any type of network-enabled standard computing device such as a desktop computer, smart phone, tablet, laptop or PDA amongst others.

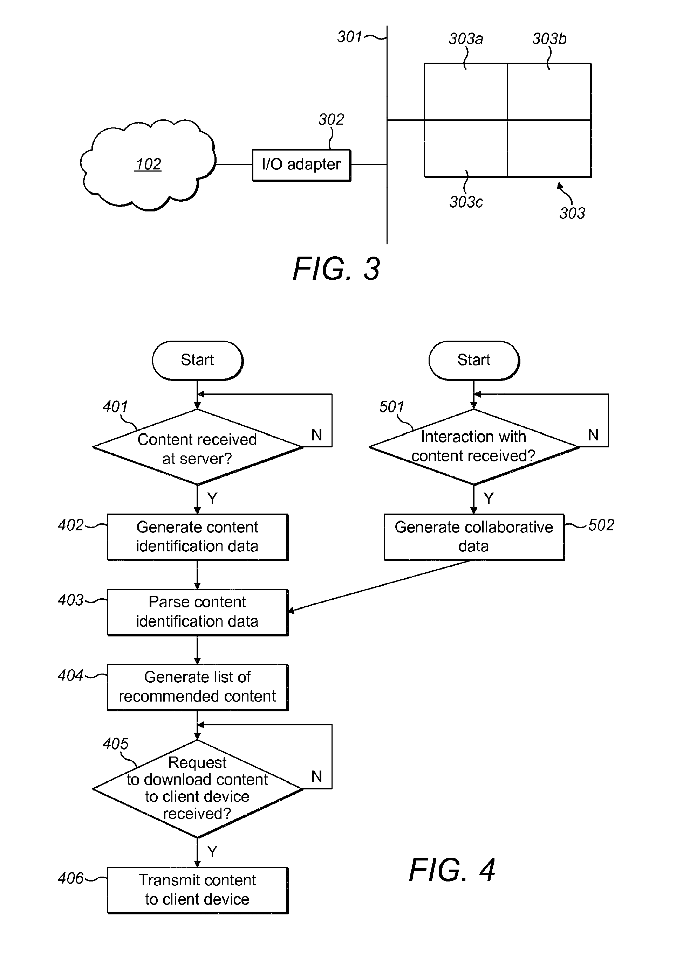

The server 101 (described below in relation to Figure 3) includes software to configure the server 101 to provide a collaborative workspace service to a plurality of users A, B, C; and each of the client devices 103a, 103b, 103c, 103d (described below in relation to Figure 2) includes client-side software to configure the device to provide a user of the device with access to the collaborative workspace service (such software may, for example, be a general web browser or a specific application dedicated to providing access to the collaborative workspace service). The server also hosts content available to the users, by providing access to the content which may be stored at a database storage (not shown) remote to server 101.

As seen in Figure 1, user A can access the collaborative workspace service through two client devices 103a, 103b. For example, device 103a may be a desktop computer in the office where user A works, and device 103b may be a laptop computer allowing user A to access the collaborative workspace service when travelling. Users B and C each have access to the collaborative workspace service through one device each. Even so, a user may be able to access the collaborative workspace service through three or more devices.

The collaborative workspace service may host a plurality of partitioned "workspaces". In the collaborative workspace system of figure 1, users B and C are members of workspace X (not shown), whereas user A is a member of a different workspace Y (not shown). This means that users B and C have access to content not accessible by user A, and vice-versa. For example, users B and C might be employees in a company that uses the collaborative workspace service, and user A is an employee at a different company that uses the collaborative workspace service. Users B and C both have access to files relevant to their company through the collaborative workspace service, and user A has access to his/her relevant files. Users B and C cannot access user A's files and vice versa. A user can be a member of a single workspace, or (s)he may be a member of two or more workspaces.

Figure 2 shows a schematic overview of a generic client device 103. A generic client device 103 includes a bus 201 that communicatively connects one or more processors 204, memory 203, and input/output adaptor 205 for connecting to the internet or other communication means 102, and a display 202 for displaying a graphical user interface of software that provides access to the collaborative workspace service to the user of the device 103. The collaborative workspace service is typically experienced by the user via an application programming interface (API). The memory 203 includes volatile and non-volatile memory for storing the client-side software for causing the device to be able to provide the collaborative workspace service to the user. The memory 203 is also adapted to store content (such as text files for example) locally on the client device.

Figure 3 shows a schematic overview of a generic server 101 according to an embodiment of the invention. A server 101 includes a bus 301 that communicatively connects an input/output adaptor 302 for connecting to the internet or other communication means, and a memory 303. The memory 303 includes both volatile and non-volatile memory. Here, software for providing the collaborative workspace service is stored at 303a; 303b represents storage; and a recommendation engine module is stored at 303c.

The invention will now be described further with reference to the process flow diagram depicted in Figure 4. At step 401, the server 101 determines whether a user of the collaborative workspace service has uploaded content to the server. Content here includes files created by the users of the system (for example text and image files), metadata about the files (such as filenames, dates etc.), and appointments and tasks set up through the collaborative workspace services amongst other content. Essentially, "content" refers to information that the user provides to the collaborative workspace service directly. For example, the user might upload a new or an updated version of an existing document containing a financial report for review by other users of his/her workspace, or an image of a new company logo for user review. The uploaded content is transferred to the server over the internet and is stored in storage 303b. The uploaded content might be a newly-created file, or a file that the user had previously downloaded from the server, edited and is now uploading it back to the server. It is to be noted that storage 303b can either be located within the server itself, or located separately from the server.

The user will typically upload the content using client-side software such as by interacting with the collaborative workspace service using a web portal on a web browser of the client device, or by using a dedicated application. The content uploaded by the user can be accessed and downloaded by other users in his/her workspace. The user uploading the content might decide to "lock" the content such that it can only be read by members of the workspace and not edited. During collaboration on a document, if a user downloads a document for editing, the user may opt to "lock" that document from editing until that user uploads the edited, updated version.

If uploaded content has been received at the server, the process continues to step 402. If no content has been uploaded, the process loops back to step 401. At step 402 the server generates content identification data about the uploaded content. This is typically by using a vector space model to determine a term vector of the content. The term vector includes "identifiers" of the content, such as key words or phrases. When generating the term vector, content-independent words such as articles and conjunctions (for example, "a", "the", "and") are removed and the incidence of all other terms is counted to give the vector of terms. If the uploaded content is an audio file such as a voice memo, this may be converted into text and a term vector for that text generated. Other models apart from vector space models may be used to generate the content identification data, for example word counting. The content identification data is stored either in storage 303b or in volatile memory.

In addition to being able to upload content, a user is also able to interact with content hosted by the collaborative workspace service, as seen at step 501 in Figure 4. A user is able to interact with content without downloading it to their client device, for example a user may open a file in the web browser of his/her client device to read it, or tag a file as a "favourite" for ease of finding at a later date. If such an interaction is received at the server at step 501, collaboration data is generated (step 502) indicating the nature of that interaction. Collaboration data includes all the instructions sent by a user to the server 101, such as read/write instructions, tagging and mouse clicks. Collaboration data also includes data such as the users who have permission to access the content on which the interaction occurred.

At step 403, the content identification data and/or the collaboration data is transferred to the recommendation engine module 303c. The recommendation engine module and the server are in logical communication with each other, and the recommendation engine module may be located within the server or may be located separately to the server. The recommendation engine module performs an appropriate set of algorithms to analyze whether or not other users of the collaborative workspace service would be likely to need to access the content. The recommendation engine can use one or more algorithms for a given content upload event in order to give the most accurate prediction of a user's likelihood to download the content. The algorithms can be changed over time.

Broadly speaking, the recommendation engine 303c is operable to parse one or more of content identification data, collaboration data and user data to determine, for respective users of the collaborative workspace service, recommended items of user-generated content to which each respective user may need to have access.

The recommendation engine 303c is capable of performing both user-based collaborative filtering based on the network of users associated with the user who uploaded the content, and item-based collaborative filtering based on the content directly. The algorithms used include memory-based algorithms computing the similarity between items or users (for example "nearest-neighbour" algorithms) or model-based algorithms using data mining or machine-learning such as Bayesian networks or latent semantic models to find patterns from training data.

Item-based filtering works on the basis that if a user A uploads or downloads a document "X", (s)he may wish or need to download a document with similar content to document "X". For example, in a memory-based algorithm, if a user A downloads a document "X", the recommendation engine would identify all the users of the collaborative workspace service who have downloaded documents with similar content identification data (such as a term vector) to that of document "X". The recommendation system would then recommend to user A the documents that the identified users have already downloaded. Only the documents that user A has access to would be recommended. In order to reduce the amount of data required in such an algorithm, the recommendation engine may be restricted to identify only users who are linked with user A in the collaborative workspace service (for example members of the same workspace).

In a model-based algorithm, if user A reads or downloads a document "Y", the recommendation engine compares the term vector of document "Y" with other documents on the collaborative workspace service and will recommend to user A documents that have a similar term vector to document "Y". Again, only documents that user A has access to will be recommended. Due to the number and intersection of users and documents in a typical collaborative workspace service, model-based algorithms typically require less data than memory based algorithms.

The recommendation engine is capable of adjusting the conditions under which two term vectors or other content identification data are similar, for example through the use of a matching parameter.

The recommendation engine may run a plurality of algorithms on the content identification data and/or collaboration data, and combine the results to identify users of the collaborative workspace service who are likely to wish to download the content that has been uploaded or interacted with. The determined users may also be identified using user data on the collaborative workspace service in addition to the content identification data and/or collaboration data. User data includes data such as the user's job title. For example, in the case where the uploaded content was a financial report, the determined users might be a subset of those users of the workspace at managerial level and above.

The recommendation system is further operable (step 404) to generate a list of recommended content for a given user of the workspace. If a list of recommended content for a given user has already been generated, it may be revised. Where users of the workspace have access to multiple items of content, the process as described above may be carried out each time an item of content is uploaded/updated or an interaction received. Alternatively, the generation/revision of a recommendation list for a user may happen periodically, at intervals. Therefore each user will have built up a list of items of content where (s)he was identified as a user likely to request to download/access that content. The list might contain only a few items, or hundreds of items, depending on the user and the number of workspaces (s)he is a member of.

The recommended items of content for each user are listed in order of likelihood (or "rating") that the user will request to download them, such that the item with the greatest likelihood or "rating" is listed first. The recommendation engine reduces the rating of the items of content over time, such that older items move further down the list and eventually fade out of the list. In this embodiment, each list is stored in storage 303b for efficient retrieval on demand at a later point in time. For example, if a first user uploads a new piece of content to the workspace that is deemed to be relevant to a second user of that workspace, the second user's list can be retrieved from storage 303b and updated to include the new item of content. However, it is possible to generate the list on-demand from the available data.

The client device 103 of a user periodically requests from the server 101 the recommended list of items for that particular user. This is typically done at predetermined time intervals, for example hourly. If the user has two or more client devices in communication with the server, each of the user's client devices will periodically request the recommended list of items from the server. On receiving the request, the server transmits the list of recommended items to the client device(s) 103.

When the client device receives the recommended list, software running on the device determines which items on the list to download. This is typically determined by the storage capacity of the client device. For example, a user might access the collaborative workspace service through both a desktop PC and a smart phone. Both the PC and smart phone may periodically request the list from the server, which proceeds to transmit it to both devices. The software running on the PC requests to download the entire list of content from the server, as the PC has a large storage capacity. On the other hand, the software running on the smart phone will choose to download a certain amount of content, as downloading the entire list would mean an unacceptable amount of storage space would be taken up. For example, on a smart phone only the first 100MB of content will be requested. As the recommendation list is ranked in order of likelihood that the user will download the item, in the case of the smart phone requesting only a certain amount of content (which might only be the first few items), this should still mean that in most cases the files that a user will request to download will be stored locally on the client device.

To enable synchronisation between the client devices and the collaborative workspace service, content that has been updated maybe indicated in the user's recommendation list by a flag, which may cause the device to automatically download the new version of that content. This synchronisation may happen periodically, or on an ad hoc basis as and when an update to recommended content is detected.

The user, via the software running on the client device, is able to adjust the amount of storage on the client device dedicated to storing content from the collaborative workspace service. For example, if a user uses his/her tablet device exclusively for accessing the collaborative workspace service whilst travelling, he/she will dedicate a large amount of memory to storing content from the collaborative workspace service. If on the other hand a user uses a smart phone primarily for personal use and only temporarily accesses the collaborative workspace service on it, he/she will dedicate a smaller amount of memory to storing content.

At step 405, if the server receives, from a client device, a request for certain items of content hosted by the collaborative workspace service, the server retrieves that item from the storage 303b and transmits it to the client device in step 406 via the internet 102. This may be as a result of an initial download, periodic synchronisation, or recommendation list update. The recommended content transmitted to the client device is stored locally in memory 203 on the client device. If this downloading has been performed before the user needs access to that item of content, then instead of downloading that content when access is requested, the client device immediately accesses the content stored in the memory 203 local to the client device.

The invention therefore provides the significant advantage to the user of a collaborative workspace service of providing recommended content to his/her client device such that it is stored locally on that client device. This means that when that user chooses to download an item of content from the collaborative workspace service, that item is already stored locally on his/her client device as the recommendation engine recognised that user as someone who might potentially download that item. As the item is already downloaded on the client device, the access speed of the item is vastly increased compared to downloading it from the server, increasing the perceived responsiveness of the system to the user, and thereby improving his/her experience of the collaborative workspace system.

As a further advantage, if the user is travelling and is out of connectivity with the server (for example there is no wifi or "3G" connection), that user can still access items of content from the collaborative workspace as they are saved locally on the client device. This is particularly advantageous as travelling is an ideal time to review and read documents.

As discussed in the summary of invention section, the inventors have also discovered a further technical effect of the invention in that the load on the server 101 hosting the collaborative server is reduced and smoothed out by providing content to users' client devices. Conventionally, if users requested files from the collaborative workspace system, these would have had to have been requested from the server and transmitted over the internet or other network to the client device. With content stored locally on client devices, this reduces the burden on the server as content is simply accessed locally. This is especially advantageous at peak times of use of the collaborative workspace service.

When content is transmitted to a client device, as described above, that content is stored locally in memory 203. On client devices running operating systems with file browser systems (for example Explorer in Microsoft Windows, or Finder in OSX), client-side software provides access to the transmitted content (such as files) in a manner so as to mirror the workspace structure of content on the collaborative workspace service. Even so, in other embodiments, the transmitted content is simply stored as a flat list of files on the client device. The local store may still be interfaced using the web interface or a dedicated software application for the collaborative workspace service, and/or the content may be accessed directly using a file browser.

When content, such as a text file, is transmitted to the client device, the user is able to work on and edit the content of that file, and upload it back to the collaborative workspace system on the server 101 for review by other users in his/her workspace. The edited file can be uploaded back to the server manually or the client device can upload the edited file automatically at predetermined time intervals, or as and when an update to the file is detected, for example, by a synchronisation process. In this way, real-time collaboration may be achievable. As described hereinabove, a client device periodically requests the recommended list of content from the server. When the client device requests which content to download, if a file in that selection is already on the client device, that file will not be re-downloaded. However, in the instance where there is a modified version of the file on the server, the modified version will be downloaded to the client device and replaces the old version stored on the device. In this manner, an effective synchronisation of content between the client devices and the collaborative workspace system can be obtained.

Further aspects of the present invention are set out in the following clauses:
Numbered clause 1. A system for delivering content to users of a collaborative workspace, comprising;
   one or more servers configured to be capable of communicating with a plurality of user-operated client devices over a network and to provide a collaborative workspace service by hosting one or more collaborative workspaces accessible by a plurality of users of said client devices, wherein the collaborative workspace service provides users with access to user-generated content and wherein the one or more servers have access to user data pertaining to the users of the collaborative workspace,
   the one ore more servers being configured to be operable to perform at least one of:
   generating content identification data indicative of items of user-generated content accessible using the collaborative workspace service; and
   monitoring the interaction of a user with user-generated content accessible using the collaborative workspace service and generating collaboration data indicative thereof;
   the system further comprising:
   a recommendation engine in logical communication with said one or more servers, the recommendation engine being operable to parse one or more of said content identification data, said collaboration data and said user data to determine, for respective users of the collaborative workspace service, recommended items of said user-generated content to which each respective user may need to have access;
   wherein the one or more servers are further configured to be operable to transmit, for each user, at least some of that user's recommended items of user-generated content to one or more client devices operated by that user.
Numbered clause 2. The system of numbered clause 1, wherein the workspaces are partitioned such that content that is accessible by users in a first workspace is inaccessible to users in a second workspace, and vice-versa.
Numbered clause 3. The system of numbered clause 1 or numbered clause 2, wherein the respective client device(s) of the determined user(s) stores the transmitted items of user-generated content so as to mirror the hosting of the user-generated content by the collaborative workspace service.
Numbered clause 4. The system of any of the preceding numbered clauses, wherein the content identification data comprises term vector data produced from the user-generated content.
Numbered clause 5. The system of any of the preceding numbered clauses, wherein the at least one of said content identification data, collaboration data and user data is parsed using user-based collaborative filtering.
Numbered clause 6. The system of any of the preceding numbered clauses, wherein the at least one of said content identification data, collaboration data and user data is parsed using item-based collaborative filtering.
Numbered clause 7. The system of any preceding numbered clause, wherein the recommendation engine is further operable to generate a list of said recommended items of user-generated content for each user of the collaborative workspace service, based on the parsing of the at least one of said content identification data, collaboration data and user data.
Numbered clause 8. The system of numbered clause 7, wherein the list of said recommended items of user-generated content is ranked in order of likelihood that the user may need to have access to the items.
Numbered clause 9. The system of numbered clause 7 or numbered clause 8, wherein each user-operated client device is configured to be operable to request, from the one or more servers, the list of recommended items of user-generated content for the respective user of the client device.
Numbered clause 10. The system of any of numbered clauses 7 to 9, wherein each user-operated client device is configured to be operable to parse the list of recommended items for said user and communicate to the one or more servers which items from the list to transmit.
Numbered clause 11. The system of numbered clause 10, wherein each user-operated client device determines which items from the list to transmit in accordance with a local storage allocation on said client device.
Numbered clause 12. The system of any of the preceding numbered clauses, further comprising a storage in logical communication with the one or more servers for storing the user-generated content.
Numbered clause 13. The system of numbered clause 12, wherein said storage also stores at least one of the content identification data, the collaboration data and the user data.
Numbered clause 14. The system of any preceding numbered clause, wherein each user-operated client device configured to be operable to periodically communicate with the one or more servers to synchronise updated items of user-generated content between the client device and the one or more collaborative workspaces.
Numbered clause 15. A computer-implemented method of delivering content to users of a collaborative workspace service hosted by one or more servers that are configured to be capable of communicating with a plurality of user-operated client devices over a network and to provide a collaborative workspace service by hosting one or more collaborative workspaces accessible by a plurality of users of said client devices, wherein the collaborative workspace service provides users with access to user-generated content and wherein the one or more servers have access to user data pertaining to the users of the collaborative workspace service, the method comprising the steps of:
   performing, at the server, at least one of:
      generating content identification data indicative of items of user-generated content accessible using the collaborative workspace service; and
      monitoring the interaction of a user with user-generated content accessible using the collaborative workspace service and generating collaboration data indicative thereof;
   the method further comprising:
      parsing, at a recommendation engine in logical communication with the server, one or more of said content identification data, said collaboration data or said user data to determine, for respective users of the collaborative workspace service, recommended items of said user-generated content to which each respective user may need to have access;
      and transmitting, for each user, at least some of that user's recommended items of user-generated content to one or more of the respective client device(s) operated by that determined user.
Numbered clause 16. A computer program product comprising instructions which when executed by data processing apparatus causes the apparatus to be configured to be operable in accordance with the server comprised in the system of any of numbered clauses 1-14.
Numbered clause 17. A client device operable to receive content from a collaborative workspace, the client device being configured to be capable of communicating with one or more servers configured to provide a collaborative workspace service by the server hosting one or more collaborative workspaces accessible by a plurality of users of said client devices, wherein the collaborative workspace service provides users with access to user-generated content and wherein the server has access to user data pertaining to the users of the collaborative workspace,
   the client device being configured to receive from the one or more servers at least some of a user's recommended items of user-generated content determined by a recommendation engine in logical communication with said one or more servers, the recommendation engine being operable to parse one or more of content identification data indicative of items of user-generated content accessible using the collaborative workspace service; collaboration data indicative of the interaction of a user with user-generated content accessible using the collaborative workspace service; and said user data to determine, for respective users of the collaborative workspace service, recommended items of said user-generated content to which each respective user may need to have access.
Numbered clause 18. The client device of numbered clause 17, wherein the client device is configured to be operable to periodically communicate with the one or more servers to synchronise updated items of user-generated content between the client device and the one or more collaborative workspaces.
Numbered clause 19. The client device of numbered clause 17 or numbered clause 18, wherein the client device is configured to store the received items of user-generated content so as to mirror the hosting of the user-generated content by the collaborative workspace service.
Numbered clause 20. The client device of numbered clause 17, numbered clause 18 or numbered clause 19, wherein the client device is configured to be operable to request, from the one or more servers, a list of recommended items of user-generated content for the respective user of the client device.
Numbered clause 21. The client device of numbered clause 20, wherein the client device is configured to be operable to parse the list of recommended items for said user and communicate to the one or more servers which items from the list to transmit.
Numbered clause 22. The client device of numbered clause 21, wherein the client device determines which items from the list to transmit in accordance with a local storage allocation on said client device.
Numbered clause 23. A computer-implemented method of operating a client device to receive content from a collaborative workspace, the client device being configured to be capable of communicating with one or more servers configured to provide a collaborative workspace service by the server hosting one or more collaborative workspaces accessible by a plurality of users of said client devices, wherein the collaborative workspace service provides users with access to user-generated content and wherein the server has access to user data pertaining to the users of the collaborative workspace,
   the method comprising receiving, from the one or more servers, at least some of a user's recommended items of user-generated content determined by a recommendation engine in logical communication with said one or more servers, the recommendation engine being operable to parse one or more of content identification data indicative of items of user-generated content accessible using the collaborative workspace service; collaboration data indicative of the interaction of a user with user-generated content accessible using the collaborative workspace service; and said user data to determine, for respective users of the collaborative workspace service, recommended items of said user-generated content to which each respective user may need to have access.
Numbered clause 24. A computer program product comprising instructions which when executed by data processing apparatus causes the apparatus to be configured to be operable in accordance with the client device of any of numbered clauses 17-22.

## Claims

1. A system for delivering content to users of a collaborative workspace, comprising;
one or more servers configured to be capable of communicating with a plurality of user-operated client devices over a network and to provide a collaborative workspace service by hosting one or more collaborative workspaces accessible by a plurality of users of said client devices, wherein the collaborative workspace service provides users with access to user-generated content and wherein the one or more servers have access to user data pertaining to the users of the collaborative workspace,
the one or more servers being configured to be operable to perform at least one of:
generating content identification data indicative of items of user-generated content accessible using the collaborative workspace service; and
monitoring the interaction of a user with user-generated content accessible using the collaborative workspace service and generating collaboration data indicative thereof;
the system further comprising:
a recommendation engine in logical communication with said one or more servers, the recommendation engine being operable to parse one or more of said content identification data, said collaboration data and said user data to determine, for respective users of the collaborative workspace service, recommended items of said user-generated content to which each respective user may need to have access;
wherein the one or more servers are further configured to be operable to transmit, for each user, at least some of that user's recommended items of user-generated content to one or more client devices operated by that user.

2. The system of claim 1, wherein the workspaces are partitioned such that content that is accessible by users in a first workspace is inaccessible to users in a second workspace, and vice-versa.

3. The system of claim 1 or claim 2, wherein the respective client device(s) of the determined user(s) stores the transmitted items of user-generated content so as to mirror the hosting of the user-generated content by the collaborative workspace service.

4. The system of any of the preceding claims, wherein the content identification data comprises term vector data produced from the user-generated content.

5. The system of any of the preceding claims, wherein the at least one of said content identification data, collaboration data and user data is parsed using user-based collaborative filtering and/or wherein the at least one of said content identification data, collaboration data and user data is parsed using item-based collaborative filtering.

6. The system of any preceding claim, wherein the recommendation engine is further operable to generate a list of said recommended items of user-generated content for each user of the collaborative workspace service, based on the parsing of the at least one of said content identification data, collaboration data and user data, wherein optionally the list of said recommended items of user-generated content is ranked in order of likelihood that the user may need to have access to the items.

7. The system of claim 6, wherein each user-operated client device is configured to be operable to request, from the one or more servers, the list of recommended items of user-generated content for the respective user of the client device.

8. The system of claim 6 or claim 7, wherein each user-operated client device is configured to be operable to parse the list of recommended items for said user and communicate to the one or more servers which items from the list to transmit, wherein optionally each user-operated client device determines which items from the list to transmit in accordance with a local storage allocation on said client device.

9. The system of any of the preceding claims, further comprising a storage in logical communication with the one or more servers for storing the user-generated content, wherein optionally said storage also stores at least one of the content identification data, the collaboration data and the user data.

10. The system of any preceding claim, wherein each user-operated client device configured to be operable to periodically communicate with the one or more servers to synchronise updated items of user-generated content between the client device and the one or more collaborative workspaces.

11. A computer-implemented method of delivering content to users of a collaborative workspace service hosted by one or more servers that are configured to be capable of communicating with a plurality of user-operated client devices over a network and to provide a collaborative workspace service by hosting one or more collaborative workspaces accessible by a plurality of users of said client devices, wherein the collaborative workspace service provides users with access to user-generated content and wherein the one or more servers have access to user data pertaining to the users of the collaborative workspace service, the method comprising the steps of:
performing, at the server, at least one of:
generating content identification data indicative of items of user-generated content accessible using the collaborative workspace service; and
monitoring the interaction of a user with user-generated content accessible using the collaborative workspace service and generating collaboration data indicative thereof;
the method further comprising:
parsing, at a recommendation engine in logical communication with the server, one or more of said content identification data, said collaboration data or said user data to determine, for respective users of the collaborative workspace service, recommended items of said user-generated content to which each respective user may need to have access;
and transmitting, for each user, at least some of that user's recommended items of user-generated content to one or more of the respective client device(s) operated by that determined user.

12. A computer program product comprising instructions which when executed by data processing apparatus causes the apparatus to be configured to be operable in accordance with the server comprised in the system of any of claims 1-10.

13. A client device operable to receive content from a collaborative workspace, the client device being configured to be capable of communicating with one or more servers configured to provide a collaborative workspace service by the server hosting one or more collaborative workspaces accessible by a plurality of users of said client devices, wherein the collaborative workspace service provides users with access to user-generated content and wherein the server has access to user data pertaining to the users of the collaborative workspace,
the client device being configured to receive from the one or more servers at least some of a user's recommended items of user-generated content determined by a recommendation engine in logical communication with said one or more servers, the recommendation engine being operable to parse one or more of content identification data indicative of items of user-generated content accessible using the collaborative workspace service; collaboration data indicative of the interaction of a user with user-generated content accessible using the collaborative workspace service; and said user data to determine, for respective users of the collaborative workspace service, recommended items of said user-generated content to which each respective user may need to have access.

14. A computer-implemented method of operating a client device to receive content from a collaborative workspace, the client device being configured to be capable of communicating with one or more servers configured to provide a collaborative workspace service by the server hosting one or more collaborative workspaces accessible by a plurality of users of said client devices, wherein the collaborative workspace service provides users with access to user-generated content and wherein the server has access to user data pertaining to the users of the collaborative workspace,
the method comprising receiving, from the one or more servers, at least some of a user's recommended items of user-generated content determined by a recommendation engine in logical communication with said one or more servers, the recommendation engine being operable to parse one or more of content identification data indicative of items of user-generated content accessible using the collaborative workspace service; collaboration data indicative of the interaction of a user with user-generated content accessible using the collaborative workspace service; and said user data to determine, for respective users of the collaborative workspace service, recommended items of said user-generated content to which each respective user may need to have access.

15. A computer program product comprising instructions which when executed by data processing apparatus causes the apparatus to be configured to be operable in accordance with the client device of claim 13.
